(19) Europäisches Patentamt
European Patent Office
Office européen des brevets

(11) EP 1 152 358 A2

(12) EUROPEAN PATENT APPLICATION

(43) Date of publication:
07.11.2001 Bulletin 2001/45

(51) Int Cl.[7]: G06F 17/60

(21) Application number: 01302985.5

(22) Date of filing: 29.03.2001

(84) Designated Contracting States:
AT BE CH CY DE DK ES FI FR GB GR IE IT LI LU MC NL PT SE TR
Designated Extension States:
AL LT LV MK RO SI

(30) Priority: 29.03.2000 JP 2000091230

(71) Applicant: Nippon Columbia Co., Ltd.
Tokyo 107-8011 (JP)

(72) Inventor: Yazawa, Hiroyuki
Edogawa-ku, Tokyo 132-0031 (JP)

(74) Representative: Hackney, Nigel John et al
Mewburn Ellis,
York House,
23 Kingsway
London WC2B 6HP (GB)

# (54) Content data delivery system and content data delivery method

(57) An object of the present invention is to provide a content data delivery system that when a user receive a delivery of content data from a plurality of content delivery means having merits and demerits, the user can easily select a favorite content delivery means suitable for himself, and also the content deliverer can prevent troubles.

The content data delivery system is characterized by that the content data delivery system comprises a plurality of delivery servers and a delivery route transmission server, the delivery server responding to the download request of a content data and the delivery route transmission server informing a user terminal of the delivery route when a demand for delivering of the content data is made between a content managing server and the user terminal, and the content managing server compares a condition responding to the demand for delivering from the user terminal with a content supply capacity at present by referring to a working status of the delivery servers to specify delivery servers capable of delivering the content data to the user terminal under the set condition, and transmits delivery route information composed of the specified delivery servers and accounts required for delivery from the delivery servers to the delivery route transmission server and the user terminal, the decided delivery route information being transmitted from the user terminal to the delivery route transmission server.

FIG. 1

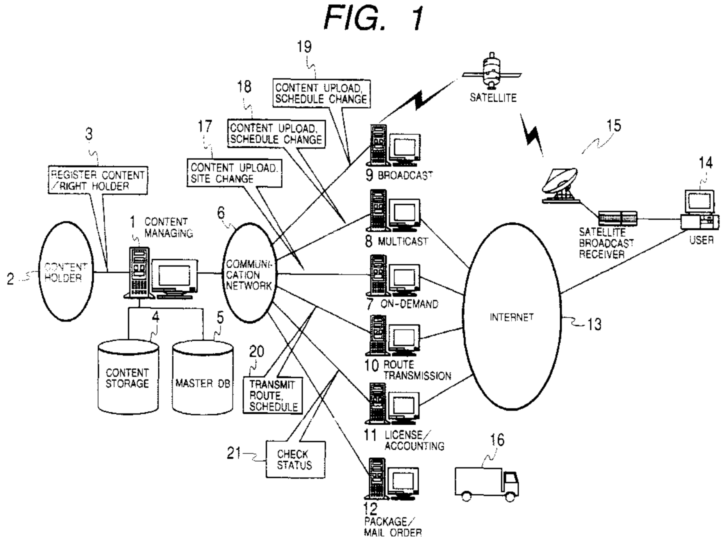


EP 1 152 358 A2

## Description

The present invention relates to a system and a method for delivering (supplying) content data such as music data or image data.

In a content data delivery system using the Internet, a user accesses a delivery site (on any one of a content delivery server, a license accounting server or the other servers) from the user's terminal, and selects some items of content data among a content list and a data format (a compression mode and so on). When the user selects purchase, the user's terminal is linked to a license and accounting server to start a payment procedure. The payment procedure is generally performed according to the following order.

①Selection of a method of payment
②Checking of solvency (inquiring of a database of a settlement organization)
③Settling of payment

After completion of the payment procedure, the license server sends a key to solve the cipher code of the content data to the user. The license and accounting server makes the payment procedure with the settlement organization to distribute the delivery fee to the right holder. The user terminal receiving the key is connected to a content data delivery server to receive the content data.

Therein, the license and accounting server and the content data delivery server inform a content holder of the record of key and content data. Japanese Patent Application Laid-Open No.11-312175 discloses a technology of delivering music using the Internet and a personal communication line.

(1) On-demand type content data delivery

(a) Delivery is performed by responding to a demand of a user. There are various kinds of communication methods such as a method of using the Internet, a method of directly using a telephone line. However, it is essentially a one-to-one communication method. In a pay content data delivery system, the content data is ciphered, and a key for deciphering is usually downloaded from a Web server, which is called as a license server, after completion of the payment procedure.

(b) Advantages

①The user can receive the content data by on-demand without moving from his own room.
②As for the content holder, the initial investment is comparatively small because of no package production.

(c) Disadvantages

① Under the present situation, the telephone line is generally used for the transmission route for delivering the content data, and accordingly a long receiving time is required, which increases expense of the user.
②In a case where number of downloads is large, overload of the server and traffic problems of the network are caused to further increase the time for receiving the content data. The content holder may lose his business chance by increasing the waiting time of the users.

(2) Multicast type content data delivery

(a) Content data is delivered to a plurality of specified users (registered users) at a time on the Internet to form a one-to-multitude method. In a pay content data delivery system, the content data is ciphered, and a key for deciphering is usually downloaded from a Web server, which is called as a license server, with a fee.

(b) Advantages

①The cost performance is relatively better when number of receiving times of content data is large because the content data can be delivered to many users at a time.
②The waiting time of the user is relatively short if a frequency of delivery is high (interval of delivery is short).

(c) Disadvantages

① Under the present situation, the telephone line is generally used for the transmission route for delivering the content data, but the waiting time of the user is long because a long time is required for receiving the content data by the user terminal.
②In a case where the frequency of delivery is too high, burden of the router is increased to decrease performance of the related network. In a case where number of user terminals receiving content data is small, the cost performance is worse.
③In a case where the frequency of delivery is low (interval of delivery is long), the waiting time of the user becomes long.

(3) Broadcast type content data delivery

(a) Content data is ciphered and delivered on a CS data broadcast or the like to be received using receivers. In a pay content data delivery system, the content data is ciphered, and a key for deciphering is usually downloaded from a Web server, which is called as a license server, with a fee.

(b) Advantages

①The cost performance is better when number of receiving times of content data is large because the content data can be delivered to many users at a time.
②The waiting time of the user is shorter if a frequency of delivery is high.

(c) Disadvantages

①In a case where the frequency of delivery is high, the cost performance is worse if number of user terminals receiving content data is small.
②In a case where the frequency of delivery is low (interval of delivery is long), the waiting time of the user becomes long.

(4) Package type content data delivery

(a) Compact disks (CDs) are typical of this content data. The present specification is mainly on the premise that the package type content data delivery is mail-order selling of packages.

(b) Advantages

①In a case where large number of packages are produced, both of expense of the user and expense of the content holder are smaller than those in the on-demand type content data delivery and in the broadcast type content data delivery.
②The package type content data delivery is suitable for a long-playing content data (such as an album).

(c) Disadvantages

①Long time is required for manufacturing and delivering the content data packages.
②Burden of the content holder is large if the content data packages are left unsold.

Preferably, an object of the present invention is to provide a content data delivery system that when a user receive a delivery of content data from a plurality of content data delivery means having merits and demerits as described above, the user can easily select a desirous content data delivery means suitable for himself, and also the content data deliverer can prevent troubles. In an embodiment of the present invention, "delivery route information" for sharing a delivery route and a delivery schedule for each item of content data between a user terminal and a content managing server is defined, and a script on a homepage or an apparatus capable of linking to various kinds of delivery servers from the user terminal using the delivery route information is provided and distributed to users. Items of content data to be delivered are uploaded to an on-demand type delivery server, and a multicast type delivery server and a broadcast type delivery server, delivery frequencies of the multicast type delivery server and the broadcast type delivery server are set to initial values (the initial value may differ from content to content).

The user select an item of the content data and a data format among a content list, and decides to purchase it.

After deciding the purchase on the user terminal, the user terminal proceeds to download of the key for decipher. Since there are various kinds of methods of payment such as using credit card, prepaid card etc., the solvency is checked at downloading of the key. If there is no problem, the downloading of the key is allowed. The license and accounting server notifies the content management server of occurrence of the download request of key.

The content management server compares number of downloads request of the key with a capacity of each of the delivery servers for supplying the specified content at that time, and updates the delivery route information of the content data by increasing and decreasing the on-demand type delivery servers (increasing and decreasing the on-demand type delivery sites), and by increasing and decreasing the delivery frequencies of the multicast type and the broadcast type delivery servers. The update of the delivery route is performed on every downloading of the key, or on every a predetermined number of downloading times of the key, or on every a predetermined time interval. The update of delivery route may be performed by automatically or manually changing the frequency using a numerical formula. The update of delivery route is instantaneously reflected to the "delivery route information" described above.

In the user terminal, after downloading of the key, downloading of the delivery route information is successively performed. The user selects an appropriate delivery route intentionally or by automatic selection, and then starts downloading of the content data.

In a case of selecting the on-demand type delivery server, downloading of the content data is immediately started.

In a case of selecting the multicast type delivery server or the broadcast type delivery server, after a receiving stand-by state, downloading of the content data is started at a delivery start time which is notified by a schedule.

Preferably, the present invention is characterized by a content data delivery system in which a plurality of delivery means (delivery means by the Internet (on-demand type and multicast type delivery means), CS data broadcast delivery means (broadcast type delivery means) and mail order delivery means (package type delivery means)) are provide, and the content data can be delivered by a user-desired delivery means.

Preferably, the content data delivery system in accordance with the present invention comprises a content managing server, and the content managing server supplies the delivery route information in regard to supplying capacity of each of the delivery means to the user terminal. The user terminal can select a delivery means suitable (short download time, low cost etc.) for purchasing the content data by referring to the delivery route information.

Preferably, the present invention provides the following systems.

The present invention provides a content data delivery system for delivering a content data to a user terminal according to a demand of a user through a content managing server storing content data and right-holder information, which comprises a plurality of delivery servers and a delivery route transmission server, the plurality of delivery servers delivering the content data when the demand for delivering of the content data is made between the content managing server and the user terminal, the content managing server specifying delivery servers capable of delivering the content data to the user terminal under a condition, the condition being set by comparing a condition responding to the demand for delivering from the user terminal with a content supply capacity at present by referring to a working status of the delivery servers, and transmitting delivery route information to the delivery route transmission server and the user terminal, the deliver route information comprising the information of the specified delivery server and the information of the accounts required for delivery from the specified delivery server, the decided delivery route information being transmitted from the user terminal to the delivery route transmission server.

In a further aspect, the present invention provides a content data delivery system in which the plurality of delivery servers are a plurality of on-demand type delivery servers, a combination of on-demand type delivery servers and multicast type delivery servers, a combination of on-demand type delivery servers and broadcast type delivery servers, or a combination of these three kinds of delivery servers.

In a further aspect the present invention provides a content data delivery system in which the license and accounting server settles account after confirming of the content data being delivered to and received by the user terminal.

In a further aspect, the present invention provides a content data delivery method of delivering a content data to a user terminal according to a demand of a user through a content managing server storing content data and right-holder information, wherein the method comprising the steps of setting a condition responding to the demand for delivering from the user terminal according to a content supply capacity at present by referring to a working status of a plurality of delivery servers between the content managing server and the user terminal; specifying delivery server capable of delivering the content data to the user terminal under the set condition; and transmitting delivery route information comprising the information of the specified delivery server and the information of the accounts required for delivery from the specified delivery server to the user terminal.

In a further aspect, the present invention further provides a content data delivery method in which the plurality of delivery servers are a plurality of on-demand type delivery servers, a combination of on-demand type delivery servers and multicast type delivery servers, a combination of on-demand type delivery servers and broadcast type delivery servers, or a combination of these three kinds of delivery servers.

## BRIEF DESCRIPTION OF DRAWINGS

FIG. 1 is a block diagram showing an embodiment in accordance with the present invention.

FIG. 2 is a flowchart showing operations of a user terminal, a license and accounting server, a delivery route transmission server and a content managing server.

FIG. 3 is a flowchart showing a routine by which a user determines content purchasing.

FIG. 4 is a flowchart (1) showing a method of updating a delivery route information.

FIG. 5 is a flowchart (2) showing a method of updating a delivery route information.

FIG. 6 is a flowchart (3) showing a method of updating a delivery route information.

FIG. 7 is an example of delivery route information.

FIG. 8 is another example of delivery route information.

FIG. 9 is another example of delivery route information.

## DESCRIPTION OF THE PREFERRED EMBODIMENTS

An embodiment in accordance with the present invention will be described below, referring to the accompanied drawings.

FIG. 1 is a block diagram showing the embodiment in accordance with the present invention. Referring to FIG. 1, content data supplied from a content holder 2 and right holders information of the content data are registered 3 in a content managing server 1. The content managing server 1 comprises a content storage 4 and a master database (DB) 5, and the right holder information and the user information are stored in the master DB 5. The content managing server 1 is connected to an on-demand type delivery server 7, a multicast type delivery server 8, a broadcast type delivery server 9, a delivery route transmission server 10, a license/accounting server 11 and a package mail order server 12 through a communication network 6 such as an intranet or the Internet. The on-demand type delivery server 7, the multicast type delivery server 8, the delivery route transmission server 10 and the license/accounting server 11 are connected to a user terminal 14 through the Internet 13. The broadcast type delivery server 9 is connected to the user terminal 14 through a satellite broadcast network 15 consisting of a satellite and a parabola antenna satellite broadcast receiver. The package mail order server 12 is connected to the user terminal 14 by a transporting means 16 such as a track.

In such a content data delivery system, the content data according to a demand of the user is delivered to the used terminal 14 through the delivery servers (7, 8, 9 and 12) from the content managing server 1 in which the content data and the right holder information are registered and stored.

Before start of the content data delivery server, initially, content upload is made to the on-demand type delivery server 7 and may be made to the multicast type delivery server 8 and the broadcast type delivery server 9.

When a demand for delivering of content data from the user is made, delivery site change (adding, deleting etc.) 17 are made to the on-demand type delivery server 7, and delivery schedule change 18 are made to the multicast type delivery server 8 and the broadcast type delivery server 9 depending on the statistical magnitude of the demand.

The content managing server 1 transmits the information of delivery route and delivery schedule 20 to the delivery route server 10, and commands the license and accounting server 11 to check status of registration of key and download of key 21.

As described above, the content data delivery system comprises the plurality of delivery means. That is, the content data delivery system comprises the delivery means by the Internet (on-demand type and multicast type delivery means), the CS data broadcast delivery means (broadcast type delivery means) and the mail order delivery means (package type delivery means), and the user can receive delivery of the content data from a user-desired delivery means. The content data can be delivered to the user terminal 14 through the plurality of on-demand type delivery means, or the combination of the on-demand type and the multicast type delivery means, or the combination of the on-demand type and the broadcast type delivery means, or the combination of three kinds of delivery means. Further, the package mail order means may be combined.

As described above, the content data delivery system comprises the content managing server 1, and the content managing server 1 supplies the delivery route information in regard to supplying capacity of each of the delivery means to the user terminal 14 through the delivery route transmission server 10. The user can select a delivery means suitable for purchasing the content data in taking conditions such as short download time, low cost etc. by referring to the delivery route information supplied through the user terminal 14.

According to the content data delivery system, the content data deliverer can stably supply the content data to the user with avoiding troubles such as an overload of the communication line, spending of a long time in the delivery and so on. On the other hand, the user can select a favorite delivery means in his own convenience, and thereby can obtain the content data without dissatisfaction such as long downloading time, increase in communication fee and so on.

The change of delivery route is calculated by taking an accounting corresponding to the condition into consideration in addition to the capability of delivering the content data of each of the delivery means.

The service information supplied to the user through the content data deliver system is classified into basic service and advanced service, and the contents of the services are as follows.

The service information supplied to the user by the service is as follows.

[Basic service]

1. Content list

   Database comprising title names, artist names, still pictures of the content data can be seen.

2. Information on delivery routes

   (a) Channel information of on-demand type delivery sites (plural)
   (b) IP addresses and delivery schedules of multicast type delivery sites
   (c) Channel information and delivery schedules of broadcast type delivery sites
   (d) Estimated time until completion of receiving in the cases of using the above delivery means etc.

[Advanced service]

Download information of content data of various kinds of delivery (information on which content data was transmitted when, to whom, by what means etc.) is integrally managed. That is, the constructed system is that identifiers for identifying users (a membership system is employed, and User IDs are issued), identifiers for identifying content data (referred to as Content ID), identifiers for identifying delivery means (referred to as Media ID) etc. are managed as a database, and the DB is updated every content data purchasing by a user. By using the database, the following services can be performed.

1. Direct mail and E-mail for advertisement can be automatically sent because user's hobby and taste can be caught as data.

2. Cash-back service (by electronic money, web money etc.).

(a) It is possible to service cash-back to a user purchasing a content data when the user purchases another content data. The cash-back is reflected to the database.

(b) It is possible to service cash-back to a user purchasing a content data (such as a single) when the user purchases a group of content data (an album) including the content data previously purchased. (by this service, people purchasing a single are motivated to purchase an album.)

(c) It is possible to service cash-back to a user purchasing an item of content data when the user purchases in a different data format which was previously purchased by the user the content data.

Various kinds of services can be performed by combining the package mail order type delivery in addition to the deliveries described above. In this case, delivery information on the package mail order (cost, the appoint date of delivery etc.) is added to the "delivery route information". When the package mail order is selected, the procedure is shifted to a normal Internet mail order routine.

1. Service of distributing music in a limited delivery term until the appoint date of delivery with a low price or free to a user purchasing a package.

2. Service of distributing studio-drained music (full chorus may be unnecessary) in a limited delivery term until the on-sale date with a low price or free to a user making an advanced order of purchasing a new music package.

FIG. 2 is a flowchart showing operations of the user terminal 14, the license and accounting server 11, the delivery route transmission server 10 and the content managing server 1. When the user decides purchasing of a content data (S1), the user searches the delivery route information on the user terminal 14 (S2). After receiving the delivery route information (S3), the user selects a favorite delivery route (S4), and notifies the selected delivery route (S5). Then, the user receives a key for decipher the content data, and receives the content data from each of the content data delivery servers (S7), and acknowledges completion receipt of the content data (S8), and thus the procedure is completed (S9). The license and accounting server receives the delivery route information by the step (S5) of the notifying delivery route (S11), and notifies the content managing server of the delivery route (S12). Successively, the license and accounting server transmits the key (S13). The user terminal receives the key in the step S6. The license and accounting server receives the completion receipt in the step S8 of the acknowledging receipt of content data to complete the payment procedure (S14), and settles the account with a settlement organization (S15), and repeats the steps of S11 to S15.

The delivery route transmission server receives searching in step S2 of the searching delivery route information to perform delivery route information service (S21) for supplying the delivery route information. At performing this service, conditions such as an estimated waiting time until completion of download or delivery, an estimated communication cost and quality of the content data (compression method, transfer rate) for each of all the delivery routes are transmitted.

The content managing server monitors status of each of the content data delivery servers (acquiring of the estimated waiting time at supplying the content data, the estimated cost, the quality of the content data etc.) (S31), and adds number of download times of key (per unit time) by receiving the notification of the delivery route to the content managing server in the step S12 (S32), and changes the delivery route and updates the delivery route information (S33), and transmits the results to the delivery route transmission server in the step 21.

Different from the procedure shown in the above-mentioned flowchart, there is a case in which the order of the receiving of the content data and the payment procedure is inverse.

Although the terms of payment in most cases are payment by credit card, bit cash or prepaid card such as web money, payment into the bank is admitted before the key is distributed by E-mail.

FIG. 3 is a flowchart showing a routine by which a user determines content data purchasing. The user searches a piece of music on Web site (S41), and decides to purchase the piece of music (S42). The user acquires the delivery route information (S43). An estimated waiting time until completion of download or delivery, an estimated communication cost and qualities of the content data (compression method, transfer rate) for each of all the delivery routes are displayed. The user selects a favorite delivery route (S44), and judges whether or not on-demand delivery is selected (S45). If "yes", the user receives the key (S46), and connects to the download site (S47), and receives the content data (S48), and acknowledges receipt of the content data (S49), and thus the procedure is complete (S50). If "no" in the step 45, the user judges whether or not multicast delivery is selected (S51). If "yes", the user receives the key and a muliticast IP address (S52). The user judges whether or not delivery of the content data is started (S53). If "yes", the procedure proceeds to the step 48 to receive the content data. If "no", the step S53 is repeated.

If "no" in the step S51, the user judges whether or not broadcast delivery is selected (S54). If "yes", the user receives the key, a broadcast channel identifier etc. (S55), and judges whether or not delivery of the content data is started (S56). If "yes", the procedure proceeds to the step 48 to receive the content data. If "no", the step S56 is repeated. If "no" in the step S54, the user judges whether or not package mail order delivery is selected (S57). If "yes", the procedure proceeds to mail order delivery routine (S58). If "no", the procedure proceeds to the other specific routines (S59).

FIG. 4 is a flowchart showing a method of updating the delivery route information, and shows an example in which the delivery routes are two routes of the on-demand type delivery and the multicast type delivery, and there is no change in the delivery frequency in the multicast type delivery.

A cycle (n-1) and a cycle (n-2) are assumed in the precedent side with respect to a time point A, and a cycle (n), a cycle (n+1) and a cycle (n+2) are assumed in the following side.

A delivery route change program is started to calculate an estimated value ET(n+1) of the total download demands in the cycle (n+1) from numbers of the total download RT in the cycle (n-1) and the cycle (n-2) (S61), and it is judged whether or not multicast type delivery is performed in the cycle (n-1) (S62). If "no", it is judged whether or not the estimated value ET(n+1) exceeds an on-demand delivery threshold ThD (S63). If "yes", it is judged whether or not there is a vacancy in multicast delivery list of the cycle (n+1) (S64). If "yes", this content data is added to a multicast type delivery list of the cycle (n+1) (S65), and the delivery route information of the cycle (n+1) is updated (S66) to complete the delivery route change (S67), and then the processing proceeds to the next cycle. If "no" in the step S63 or in the step S64, the processing directly proceeds to the step S66.

If "yes" in the step S62, an estimated value EM (n+1) of number of multicast type delivery receiving times in the cycle (n+1) is calculated from numbers of downloads (receiving times) RM(n-1) and RM(n-2) in the cycles (n-1) and (n-2) using the following conditional equation (S68). That is,

If the number of downloads of multicast type delivery RM(n-2) = 0, the estimated value of number of multicast type delivery receiving times EM(n+1) = RM (n-1). else EM(n+1) = RM(n-1) + 2*(RM(n-1)-RM(n-2)). Then, it is judged whether or not the estimated value EM (n+1) exceeds the multicast delivery threshold ThM (S69). If "no", this content data is deleted from the multicast type delivery list of the cycle (n+1) (S70). Then, the processing proceeds to the step S66. If "yes", the processing directly proceeds to the step S66.

It is assumed that the multicast type delivery server delivers all the content data registered in the delivery list during one cycle according to a determined schedule.

An example of the multicast type delivery list is as follows.

| TIME | CONTENT NO. |
|---|---|
| 01:00:00 | xxxxxx |
| 01:04:23 | aaaaaa |

In this case, duplication of the content number is not allowed.

The estimated value of download demand is estimated from actual values measured in past several cycles. Although there are various estimating methods, the estimation in the above example is executed by the simplest method of using actual values measured in past two cycles.

At the time point A of the figure, the estimated value ET(n+1) of the total download demands during the cycle (n+1) is estimated from total number of downloads (RT(n-2) and RT(n-1)) during the cycle (n-2) and the cycle (n-1). That is,

$$ET(n+1) = RT(n-1) + 2*(RT(n-1)-RT(n-2)).$$

The estimated value is compared with a threshold, and the multicast type delivery list during the cycle (n+1) is updated (that is, the delivery schedule of the cycle (n+1) is determined).

The reason why the multicast type delivery list during the cycle (n+1) is updated is that the multicast type delivery schedule during the cycle (n) has been already transmitted to the user terminal before the time point A.

Therein, the threshold may be a value which cause an overload on the on-demand type servers.

FIG. 5 is a flowchart showing a method of updating the delivery route information, and shows an example in which the delivery routes are two routes of the on-demand type delivery and the multicast type delivery, and there is change in the delivery frequency in the multicast type delivery.

Number of delivery times of the multicast type delivery during the cycle (n) is put to Hm(n). The delivery route change program is started to calculate an estimated value ET(n+1) of the total download demands in the cycle (n+1) from numbers of the total downloads RT in the cycle (n-1) and the cycle (n-2) (S71), and it is judged whether or not multicast type delivery is performed in cycle (n-1) (S72). If "no", it is judged whether or not the estimated value ET(n+1) exceeds on-demand delivery threshold ThD (S73). If "yes", it is judged whether or not there is a vacancy in multicast delivery list of cycle (n+1) (S74). If "yes'", it is set that Hm(n+1) = 1 (S75), and the delivery route information of the next cycle is updated (S76) to complete the delivery route change (S77), and then the processing proceeds to the next cycle. If "no" in the step S73 or in the step S74, the processing directly proceeds to the step S76.

If "yes" in the step S72, it is judged "whether or not ET(m+1) exceeds the threshold ThD" (S78). If "yes", an estimated value EM(n+1) of number of multicast type delivery receiving times in the cycle (n+1) is calculated from numbers of downloads (receiving times) RM(n-1) and RM(n-2) in the cycles (n-1) and (n-2) using the following conditional equation (S79). That is,

"if RM(n-2) = 0, EM(n+1) = RM(n-1).

else EM(n+1) = RM(n-1) + 2*(RM(n-1)-RM(n-2))".

Then, EM(n+1) is compared with the product of the multicast threshold ThM and Hm(n-1) (that is, ThM · Hm (n+1)) (S80). If EM(n+1) >> ThM · Hm(n+1), it is judged "whether or not there is a vacancy in the multicast delivery list of the next cycle (n+1)" (S81). If "yes", it is set that Hm(n+1) = Hm(n+1) +1 (S82), and the processing procedds to the step S76. If EM(n+1) = ThM Hm(n+1) in the step S80, or if "no" in the step S81, it is set that Hm(n+1) = Hm(n-1) (S83), and the processing proceeds to the step S76. If EM(n+1) << ThM·Hm(n+1) in the step S80, it is set that Hm(n+1) = Hm(n-1)-1 (S84), and the processing proceeds to the step S76.

In the above-mentioned case, duplication of the content number is allowed, and frequency of content data delivery can be changed.

The threshold ThD may be numbers of download which is judged to cause an overload on the on-demand type servers.

The threshold ThM is a number of receivers of multicast type delivery by which a sufficient profit can be obtained by once of the multicast delivery.

FIG. 6 is a flowchart showing a method of updating the delivery route information, and shows an example in which the delivery routes are three routes of the on-demand type delivery, the multicast type delivery and the broadcast type delivery, and there is no change in the delivery frequency in both of the multicast type delivery and the broadcast type delivery.

The delivery route change program is started to calculate an estimated value ET(n+1) of the total download demands in the cycle (n+1) from numbers of the total download RT in the cycle (n-1) and the cycle (n-2) (S91), and it is judged whether or not multicast delivery is performed in cycle (n-1) (S92). If "no", it is judged whether or not the estimated value ET(n+1) exceeds the on-demand delivery threshold ThD (S93).

If "yes", it is judged whether or not there is a vacancy in multicast delivery list of the cycle (n+1) (S94). If "yes", this content data is added to a multicast type delivery list of cycle (n+1) (S95), and the processing proceeds to the step S99 (to be described later). If "no" in the step S93 or in the step S94, the processing directly proceeds to the step S99.

If "yes" in the step S92, an estimated value EM (n+1) of number of receiving times of the multicast type delivery of the cycle (n+1) is calculated from numbers of download (receiving times) RM(n-1) and RM(n-2) in the cycles (n-1) and (n-2) (S96), and it is judged whether or not the estimated value EM(n+1) exceeds the multicast delivery threshold ThM (S97). If "no", this content data is deleted from the multicast type delivery list of the cycle (n+1) (S98).

If "yes" in the step S97, the processing directly proceeds to the step S99.

In the step S99, it is judged whether or not broadcast type delivery is performed in the cycle (n-1). If "no", it is judged that whether or not the estimated value ET(n+1) exceeds the on-demand threshold ThD (S100). If "yes"', it is judged whether or not there is a vacancy in the broadcast type delivery list of the cycle (n+1) (S101). If "yes", this content data is added to the broadcast type delivery list of the cycle (n+1) (S102). Then, the delivery route information of the cycle (n+1) is updated (S103), and the delivery route change is completed (S104), and the processing proceeds to the next cycle. If "no" in the step S100 and the step S101, the processing directly proceeds to the step S103.

If "yes" in the step S99, an estimated value EB (n+1) of number of broadcast type delivery receiving times in the cycle (n+1) is calculated from numbers of download (receiving times) RB(n-1) and RB(n-2) in the cycles (n-1) and (n-2) using the following conditional equation (S105). That is, if the number of download of multicast type delivery RB(n-2) = 0, the estimated value of number of broadcast type delivery receiving times EB (n+1) = RB(n-1). else EB(n+1) = RB(n-1) + 2*(RB(n-1)-RB(n-2)).

Then, it is judged whether or not the estimated value EB (n+1) exceeds the broadcast delivery threshold ThB (S106). If "no", this content data is deleted from the broadcast type delivery list of the cycle (n+1) (S107), and the processing proceeds to the step S103. If "yes" in the step S106, the processing directly proceeds to the step S103.

FIG. 7 is an example of the delivery route information presented to the user which is shown by a simulation of the content data delivery system.

( Conditions )

1. A case of two delivery routes of the on-demand type and the multicast type corresponding to FIG. 4 and FIG. 5 is assumed.
2. It is assumed that content data capable of being download in 10 minutes are delivered through two routes of the on-demand type and the multicast type.
3. It is assumed that delivery is performed once in 240 minutes when the multicast type delivery is performed, and the download time is 10 minutes.
4. It is assumed that an estimated communication cost can be acquired by inquiring DBs (databases) of a provider and a communication line (carrier) company in contract with the user. (The communication cost including the line fee and the provider fee is calculated in a rate of 10 yen per minute (rounding up the fractions).

In the case shown in FIG. 5, the communication line may be connected so as to match with delivery time when the schedule of the multicast type delivery is known.

FIG. 8 is another example of the delivery route information presented to the user which is shown by a simulation of the content data delivery system. In this case, quality of content data is also taken as a parameter. (In this case, quality is taken as a parameter)

(Conditions)

1. A case of two delivery routes of the on-demand type and the multicast type corresponding to FIG. 4 and FIG. 5 is assumed.
2. Two kinds of qualities A, B are provided for one item of content data, and it is assumed that the volume of the quality A data uses two times of that of the quality B data. For example, in a case of music, it is assumed that sound quality corresponding to a CD can be obtained by the quality A, and sound quality corresponding to FM broadcast can be obtained by the quality B.
3. It is assumed that content data are delivered through two routes of the on-demand type and the multicast type.
4. It is assumed that in the on-demand type delivery, the download time takes 10 minutes for the quality A data and 5 minutes for the quality B data when the server and the communication line are not busy.
5. It is assumed that two kinds of deliveries of the quality A data and the quality B data are performed once in 240 minutes when the multicast type delivery is performed, and the download time is 10 minutes for the quality A data and 5 minutes for the quality B data.
6. It is assumed that an estimated communication cost can be acquired by inquiring DBs (databases) of a provider and a communication line (carrier) company in contract with the user. The communication cost including the line fee and the provider fee is calculated in a rate of 10 yen per minute (rounding up the fractions).

FIG. 9 shows another simulation example.

(Conditions)

1. A case of three delivery routes of the on-demand type delivery, the multicast type delivery and the broadcast type delivery corresponding to FIG. 6 is assumed. (The communication cost including the line fee and the provider fee for the on-demand type delivery and the multicast type delivery is calculated in a rate of 10 yen per minute (rounding up the fractions).
2. It is assumed that content data capable of being download in 10 minutes through the Internet and 1 minute through data broadcast are delivered through three routes of the on-demand type, the multicast type and the broadcast type.
3. It is assumed that delivery is performed once in 240 minutes when the multicast type delivery is performed, and the download time is 10 minutes.
4. It is assumed that delivery is performed once in 480 minutes when the broadcast type delivery is performed, and the download time is 1 minute. It is assumed that the broadcast receiving fee is 10 yen per minute.
5. It is assumed that an estimated communication cost other than the broadcast can be acquired by inquiring DBs (databases) of a provider and a communication line (carrier) company in contract with the user.

In the case of the example shown in FIG. 9, the communication line may be connected so as to match with delivery time when the schedule of the multicast type delivery is known. Further, the communication line may be disconnected after receiving the key when the schedule of the broadcast type delivery is known.

As described above, according to the present invention, content data can be delivered by a user-desired delivery means, and a delivery means suitable for purchasing content data can be selected on a user terminal by referring to delivery route information. Further, since the user can select the most suitable delivery means in matching with his own convenience, content data can be obtained without dissatisfaction in delivering system of the content data.

Further, there is an advantage that the content data deliverer can stably deliver the content data to the user with avoiding troubles such as an overload of the communication line, spending of a long time in the delivery and so on.

## Claims

**1.** In a content data delivery system for delivering a content data to a user terminal according to a demand of a user through a content managing server storing content data and right-holder information, the content data delivery system is **characterized by** comprising a plurality of delivery servers and a delivery route transmission server, said plurality of delivery servers delivering the content data when the demand for delivering of the content data is made between said content managing server and the user terminal, said content managing server specifies delivery servers capable of delivering the content data to the user terminal, transmitting delivery route information to the delivery route transmission server and the user terminal, said delivery route information comprising the information of delivery means for delivering the content data by the specified delivery server and the information of estimated waiting time required for delivery and the information of accounts required for delivery from said specified delivery server, the decided delivery route information being transmitted from the user terminal to said delivery route transmission server.

2. A content data delivery system according to claim 1, wherein
said content managing server specifying delivery servers capable of delivering the content data to the user terminal by comparing a condition responding to the demand for delivering from the user terminal with a content supply capacity at present by referring to a working status of said delivery servers.

3. A content data delivery system according to claim 1, wherein
said plurality of delivery servers are delivery servers selected from the groups consisting of a plurality of on-demand type delivery servers, a combination of on-demand type delivery servers and multicast type delivery servers, a combination of on-demand type delivery servers and broadcast type delivery servers, and a combination of these three kinds of delivery servers.

4. A content data delivery system according to claim 1, which further comprising a license and accounting server for settling account after confirming of the content data being delivered to and received by the user terminal.

5. In a content data delivery method of delivering a content data to a user terminal according to a demand of a user through a content managing server storing content data and right-holder information, the method is **characterized by** comprising the steps of:

setting a condition responding to the demand for delivering from the user terminal according to a content deliver capacity at present by referring to a working status of a plurality of delivery servers between the content managing server and the user terminal;
specifying delivery servers capable of delivering the content data to the user terminal under the set condition; and
transmitting delivery route information comprising the information of specified delivery server and the information of accounts required for delivery from said specified delivery servers to the user terminal.

6. A content data delivery system according to claim 1, wherein
said plurality of delivery servers are delivery servers selected from the groups consisting of a plurality of on-demand type delivery servers, a combination of on-demand type delivery servers and multicast type delivery servers, a combination of on-demand type delivery servers and broadcast type delivery servers, and a combination of these three kinds of delivery servers.

FIG. 1

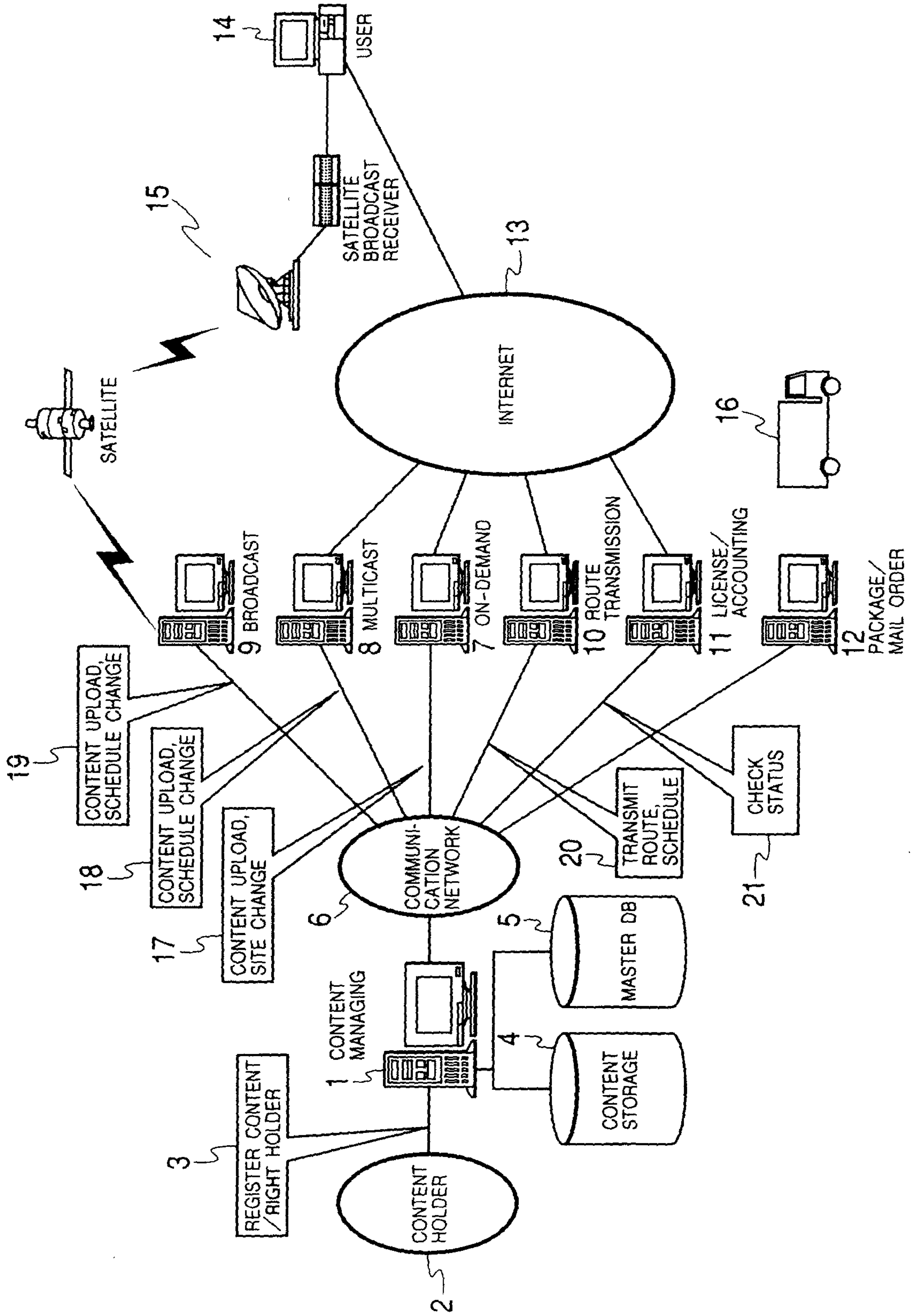

14
USER
15
SATELLITE BROADCAST RECEIVER
SATELLITE
13
INTERNET
16
9 BROADCAST
8 MULTICAST
7 ON-DEMAND
10 ROUTE TRANSMISSION
11 LICENSE/ ACCOUNTING
12 PACKAGE/ MAIL ORDER
19
CONTENT UPLOAD, SCHEDULE CHANGE
18
CONTENT UPLOAD, SCHEDULE CHANGE
17
CONTENT UPLOAD, SITE CHANGE
6
COMMUNI-CATION NETWORK
20
TRANSMIT ROUTE, SCHEDULE
21
CHECK STATUS
5
MASTER DB
4
CONTENT STORAGE
1 CONTENT MANAGING
3
REGISTER CONTENT /RIGHT HOLDER
2
CONTENT HOLDER

FIG. 2

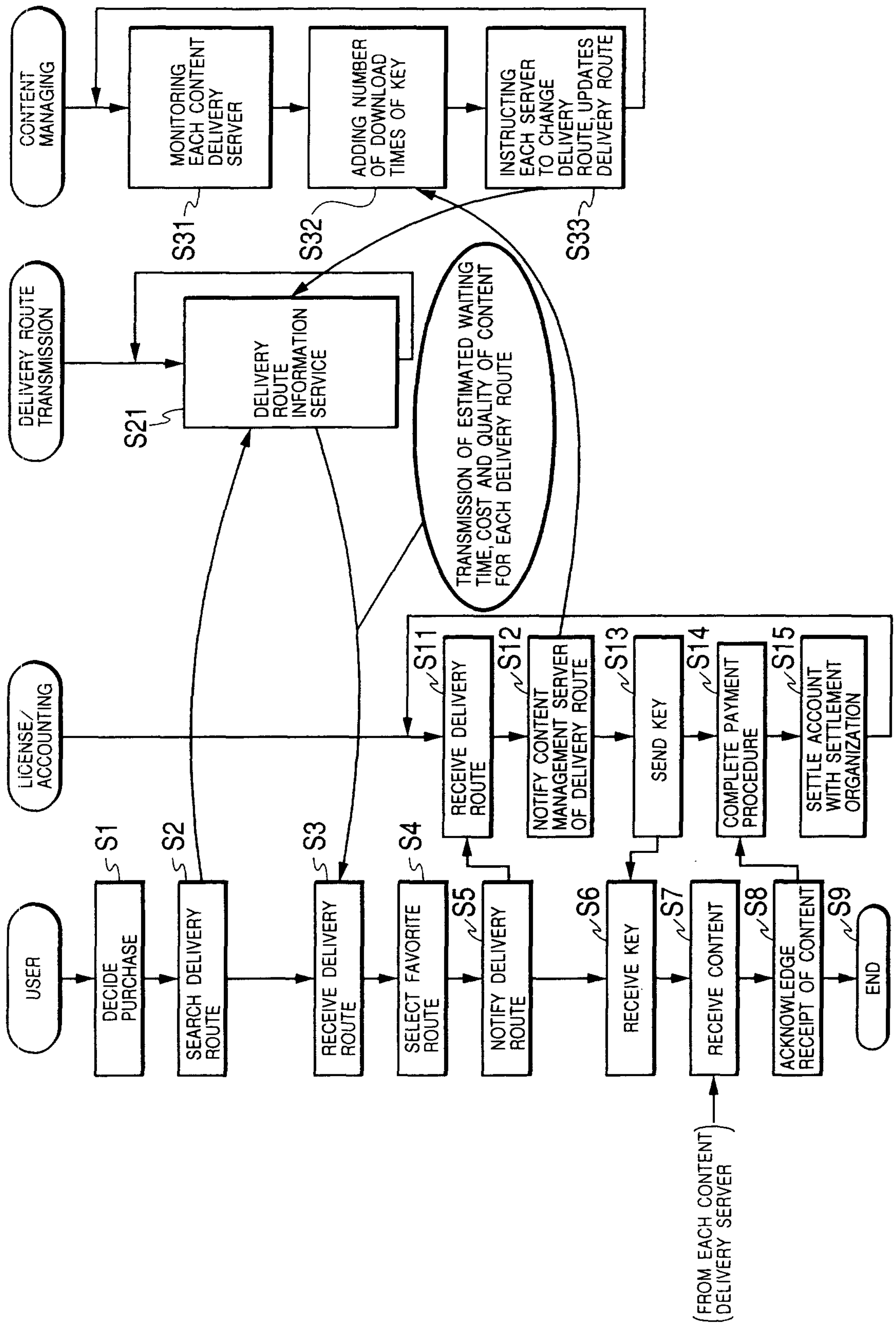
USER
DECIDE PURCHASE
S1
SEARCH DELIVERY ROUTE
S2
RECEIVE DELIVERY ROUTE
S3
SELECT FAVORITE ROUTE
S4
NOTIFY DELIVERY ROUTE
S5
RECEIVE KEY
S6
RECEIVE CONTENT
S7
ACKNOWLEDGE RECEIPT OF CONTENT
S8
END
S9
(FROM EACH CONTENT DELIVERY SERVER)
LICENSE/ ACCOUNTING
RECEIVE DELIVERY ROUTE
S11
NOTIFY CONTENT MANAGEMENT SERVER OF DELIVERY ROUTE
S12
SEND KEY
S13
COMPLETE PAYMENT PROCEDURE
S14
SETTLE ACCOUNT WITH SETTLEMENT ORGANIZATION
S15
DELIVERY ROUTE TRANSMISSION
DELIVERY ROUTE INFORMATION SERVICE
S21
TRANSMISSION OF ESTIMATED WAITING TIME, COST AND QUALITY OF CONTENT FOR EACH DELIVERY ROUTE
CONTENT MANAGING
MONITORING EACH CONTENT DELIVERY SERVER
S31
ADDING NUMBER OF DOWNLOAD TIMES OF KEY
S32
INSTRUCTING EACH SERVER TO CHANGE DELIVERY ROUTE, UPDATES DELIVERY ROUTE
S33

FIG. 3

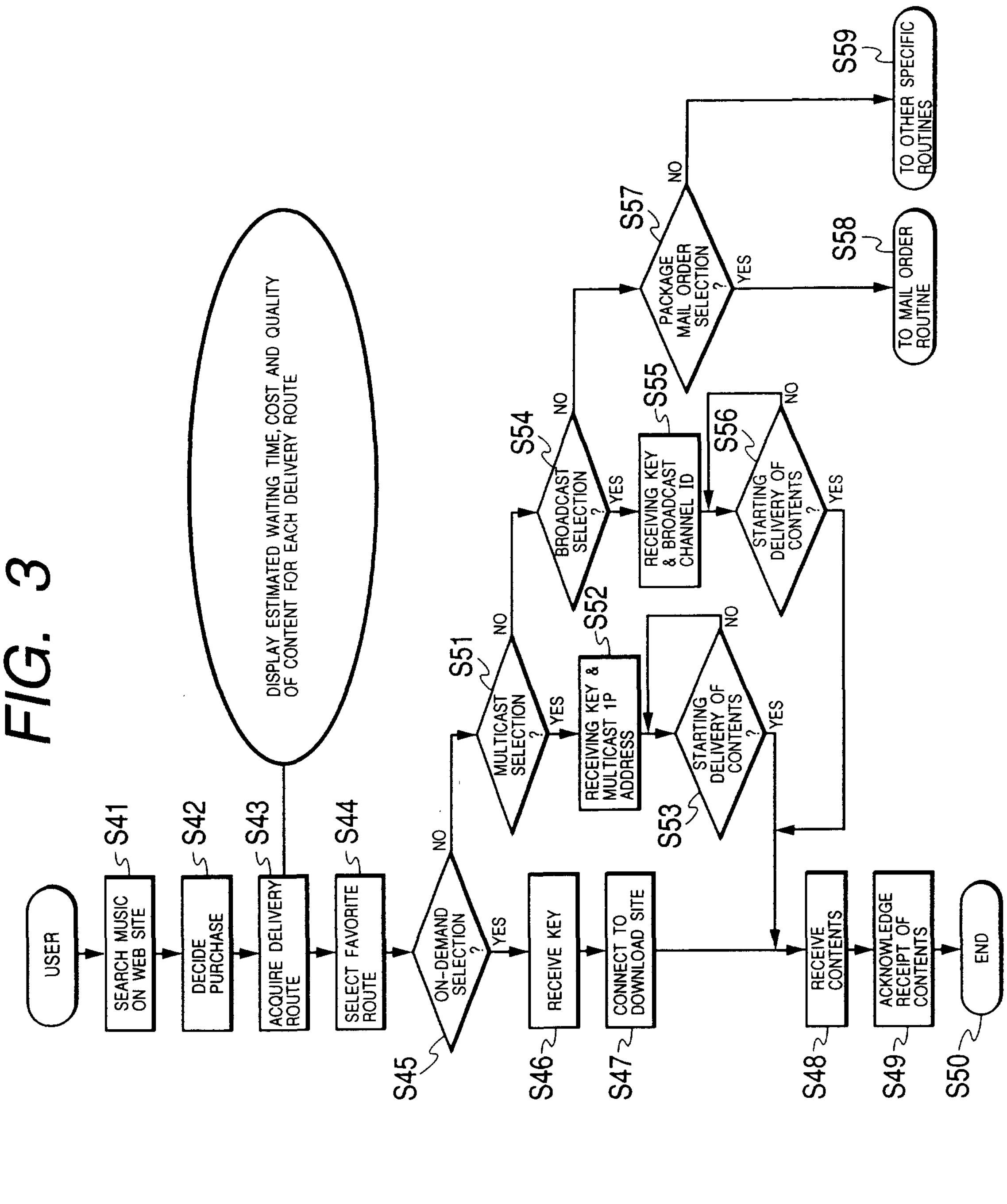
USER
SEARCH MUSIC ON WEB SITE
S41
DECIDE PURCHASE
S42
ACQUIRE DELIVERY ROUTE
S43
DISPLAY ESTIMATED WAITING TIME, COST AND QUALITY OF CONTENT FOR EACH DELIVERY ROUTE
SELECT FAVORITE ROUTE
S44
ON-DEMAND SELECTION ?
S45
YES
NO
RECEIVE KEY
S46
CONNECT TO DOWNLOAD SITE
S47
MULTICAST SELECTION ?
S51
YES
NO
RECEIVING KEY & MULTICAST 1P ADDRESS
S52
STARTING DELIVERY OF CONTENTS ?
S53
YES
NO
BROADCAST SELECTION ?
S54
YES
NO
RECEIVING KEY & BROADCAST CHANNEL ID
S55
STARTING DELIVERY OF CONTENTS ?
S56
YES
NO
PACKAGE MAIL ORDER SELECTION ?
S57
YES
NO
TO MAIL ORDER ROUTINE
S58
TO OTHER SPECIFIC ROUTINES
S59
RECEIVE CONTENTS
S48
ACKNOWLEDGE RECEIPT OF CONTENTS
S49
END
S50

FIG. 4

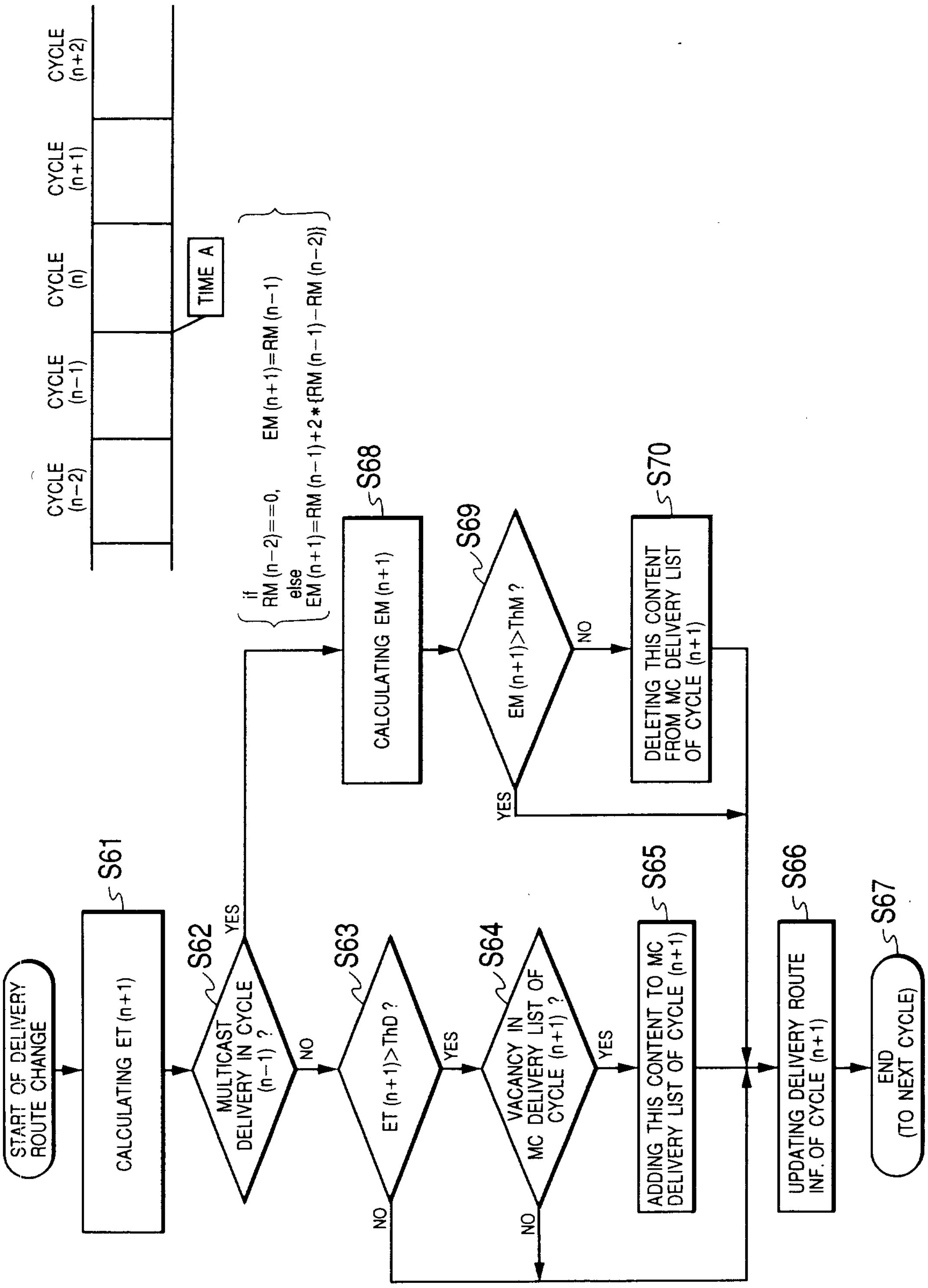
CYCLE (n−2)
CYCLE (n−1)
CYCLE (n)
CYCLE (n+1)
CYCLE (n+2)
TIME A
START OF DELIVERY ROUTE CHANGE
CALCULATING ET (n+1)
S61
MULTICAST DELIVERY IN CYCLE (n−1) ?
S62
YES
NO
ET (n+1)>ThD ?
S63
VACANCY IN MC DELIVERY LIST OF CYCLE (n+1) ?
S64
ADDING THIS CONTENT TO MC DELIVERY LIST OF CYCLE (n+1)
S65
UPDATING DELIVERY ROUTE INF. OF CYCLE (n+1)
S66
END (TO NEXT CYCLE)
S67
{ if RM (n−2)==0, EM (n+1)=RM (n−1) else EM (n+1)=RM (n−1)+2*{RM (n−1)−RM (n−2)} }
CALCULATING EM (n+1)
S68
EM (n+1)>ThM ?
S69
DELETING THIS CONTENT FROM MC DELIVERY LIST OF CYCLE (n+1)
S70

FIG. 5

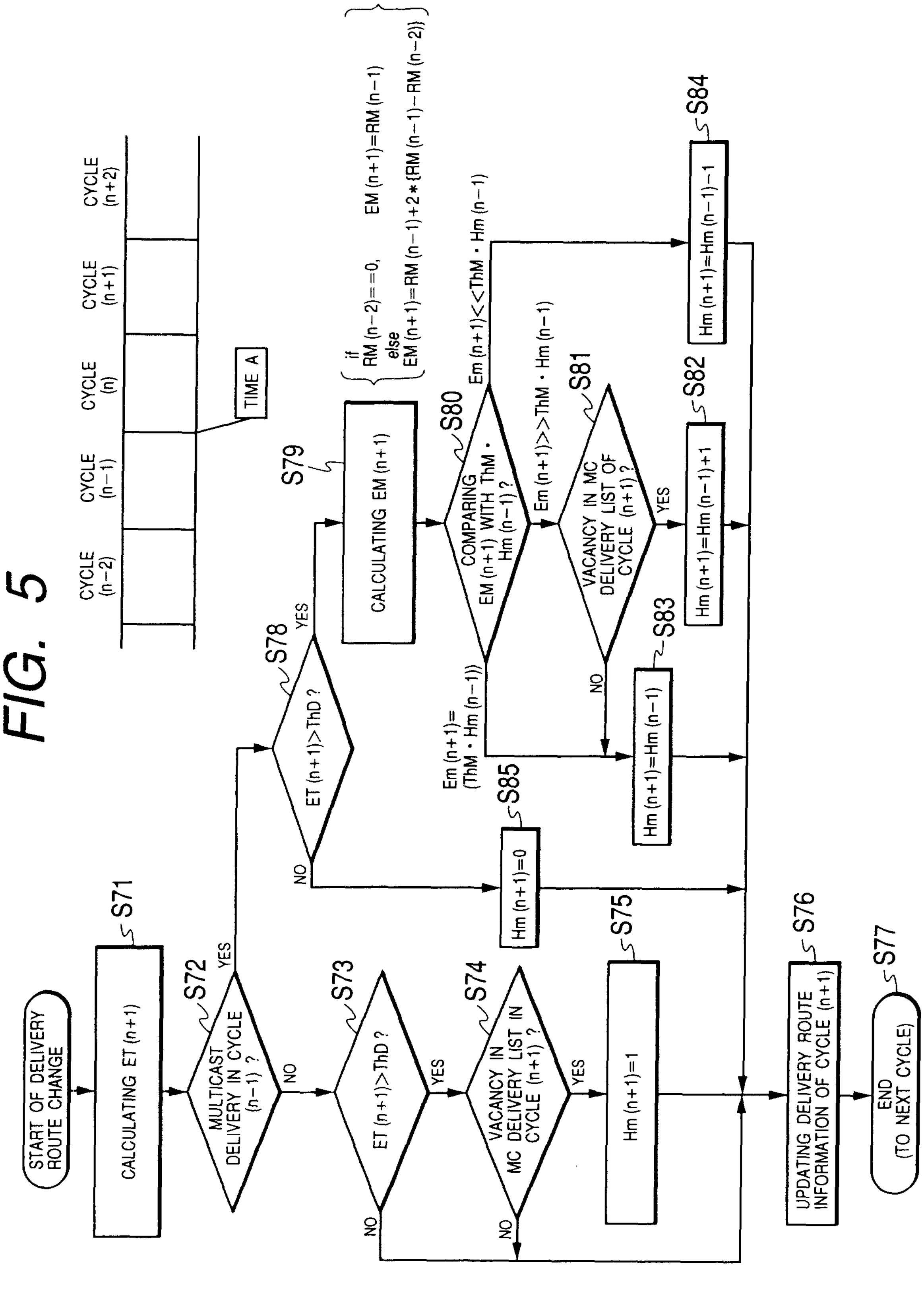
CYCLE (n−2)
CYCLE (n−1)
CYCLE (n)
CYCLE (n+1)
CYCLE (n+2)
TIME A
START OF DELIVERY ROUTE CHANGE
S71
CALCULATING ET (n+1)
S72
MULTICAST DELIVERY IN CYCLE (n−1) ?
YES
NO
S73
ET (n+1)>ThD ?
YES
NO
S74
VACANCY IN MC DELIVERY LIST IN CYCLE (n+1) ?
YES
NO
S75
Hm (n+1)=1
S78
ET (n+1)>ThD ?
YES
NO
S85
Hm (n+1)=0
S79
CALCULATING EM (n+1)
if RM (n−2)==0, EM (n+1)=RM (n−1)
else EM (n+1)=RM (n−1)+2＊{RM (n−1)−RM (n−2)}
S80
COMPARING EM (n+1) WITH ThM・Hm (n−1) ?
Em (n+1)<<ThM・Hm (n−1)
Em (n+1)>>ThM・Hm (n−1)
Em (n+1)=(ThM・Hm (n−1))
S81
VACANCY IN MC DELIVERY LIST OF CYCLE (n+1) ?
YES
NO
S82
Hm (n+1)=Hm (n−1)+1
S83
Hm (n+1)=Hm (n−1)
S84
Hm (n+1)=Hm (n−1)−1
S76
UPDATING DELIVERY ROUTE INFORMATION OF CYCLE (n+1)
S77
END (TO NEXT CYCLE)

FIG. 6

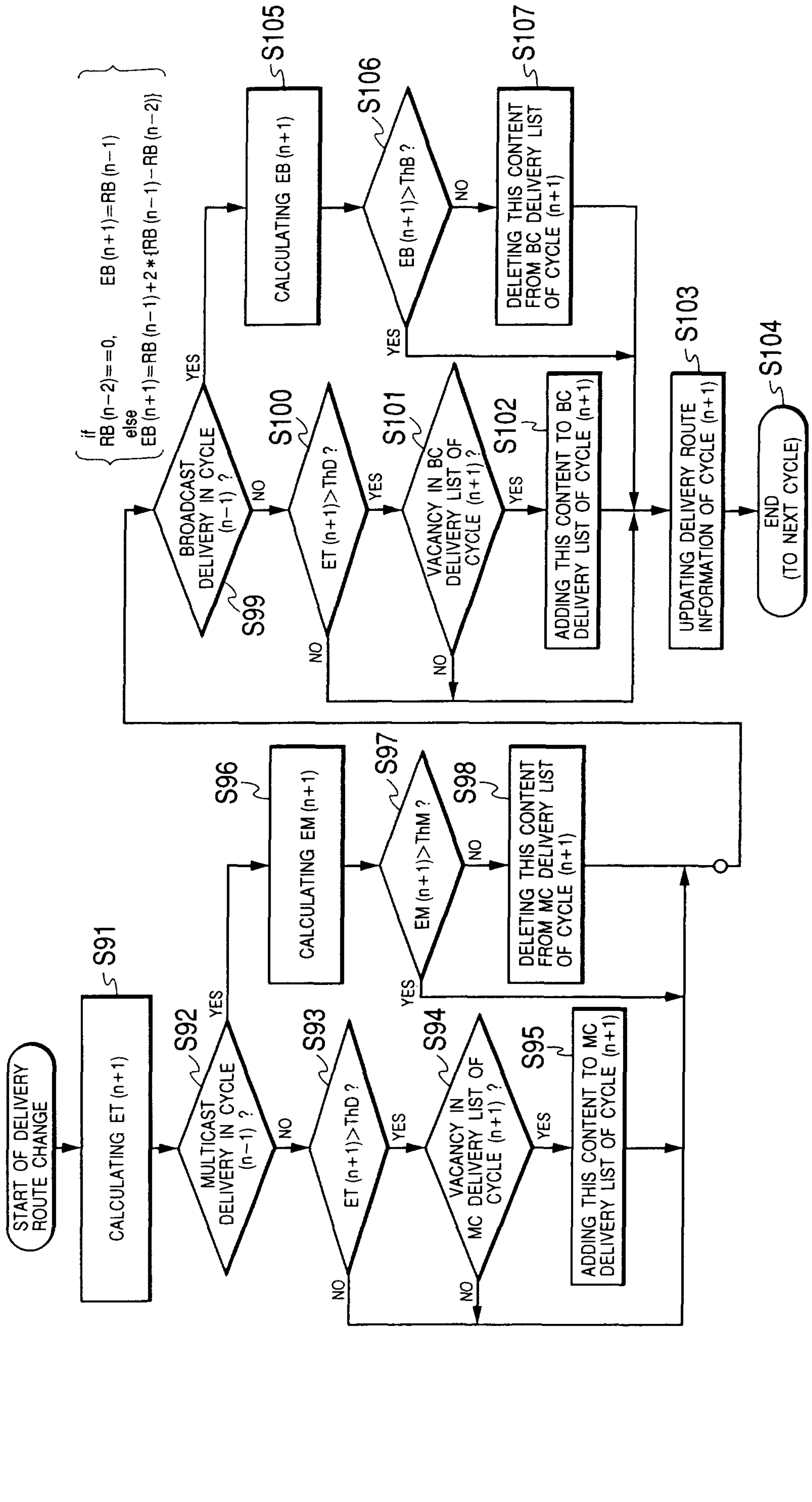
START OF DELIVERY ROUTE CHANGE
S91
CALCULATING ET (n+1)
S92
MULTICAST DELIVERY IN CYCLE (n−1) ?
YES
NO
S93
ET (n+1)>ThD ?
YES
NO
S94
VACANCY IN MC DELIVERY LIST OF CYCLE (n+1) ?
YES
NO
S95
ADDING THIS CONTENT TO MC DELIVERY LIST OF CYCLE (n+1)
S96
CALCULATING EM (n+1)
S97
EM (n+1)>ThM ?
YES
NO
S98
DELETING THIS CONTENT FROM MC DELIVERY LIST OF CYCLE (n+1)
S99
BROADCAST DELIVERY IN CYCLE (n−1) ?
YES
NO
S100
ET (n+1)>ThD ?
YES
NO
S101
VACANCY IN BC DELIVERY LIST OF CYCLE (n+1) ?
YES
NO
S102
ADDING THIS CONTENT TO BC DELIVERY LIST OF CYCLE (n+1)
S105
CALCULATING EB (n+1)
{ if RB (n−2)==0, EB (n+1)=RB (n−1) else EB (n+1)=RB (n−1)+2＊{RB (n−1)−RB (n−2)} }
S106
EB (n+1)>ThB ?
YES
NO
S107
DELETING THIS CONTENT FROM BC DELIVERY LIST OF CYCLE (n+1)
S103
UPDATING DELIVERY ROUTE INFORMATION OF CYCLE (n+1)
S104
END (TO NEXT CYCLE)

# FIG. 7

TIME T0

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | — | 10 MIN. | ¥40 | |
| 2 | INTERNET · MULTICAST | — | — | | NO MULTICAST DELIVERY PLAN |

TIME T1

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | — | 30 MIN. | ¥100 | SLIGHT OVERLOAD IN SERVER, LINE |
| 2 | INTERNET · MULTICAST | — | — | | NO MULTICAST DELIVERY PLAN |

TIME T2

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | — | 50 MIN. | ¥170 | OVERLOAD IN SERVER |
| 2 | INTERNET · MULTICAST | 240 MIN. AFTER T2 | 250 MIN. | ¥40 | MULTICAST DELIVERY START |

TIME T3

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | — | 40 MIN. | ¥130 | SLIGHT OVERLOAD IN SERVER |
| 2 | INTERNET · MULTICAST | 10 MIN. AFTER T3 | 20 MIN. | ¥40 | MULTICAST DELIVERY TO BE STARTED SOON |

TIME T4

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | — | 30 MIN. | ¥100 | SLIGHT OVERLOAD IN SERVER, LINE |
| 2 | INTERNET · MULTICAST | 240 MIN. AFTER T4 | 250 MIN. | ¥40 | |

# FIG. 8

TIME T0

| ROUTE NO. | DELIVERY MEANS | QUALITY | DELIVERY SCHEDULE | ESTIMATED WAITING TIME | ESTIMATED COMMUNICATION COST | NOTES (NOT PRESENT TO USERS) |
|---|---|---|---|---|---|---|
| 1 | INTERNET · ON-DEMAND | A | — | 10 MIN. | ¥40 | |
| 2 | INTERNET · ON-DEMAND | B | — | 5 MIN. | ¥20 | |
| 3 | INTERNET · MULTICAST | A | — | — | — | NO MULTICAST DELIVERY PLAN |
| 4 | INTERNET · MULTICAST | B | — | — | — | NO MULTICAST DELIVERY PLAN |

TIME T1

| ROUTE NO. | DELIVERY MEANS | QUALITY | DELIVERY SCHEDULE | ESTIMATED WAITING TIME | ESTIMATED COMMUNICATION COST | NOTES (NOT PRESENT TO USERS) |
|---|---|---|---|---|---|---|
| 1 | INTERNET · ON-DEMAND | A | — | 30 MIN. | ¥100 | SLIGHT OVERLOAD IN SERVER, LINE |
| 2 | INTERNET · ON-DEMAND | B | — | 15 MIN. | ¥50 | SLIGHT OVERLOAD IN SERVER, LINE |
| 3 | INTERNET · MULTICAST | A | — | | — | NO MULTICAST DELIVERY PLAN |
| 4 | INTERNET · MULTICAST | B | — | | — | NO MULTICAST DELIVERY PLAN |

TIME T2

| ROUTE NO. | DELIVERY MEANS | QUALITY | DELIVERY SCHEDULE | ESTIMATED WAITING TIME | ESTIMATED COMMUNICATION COST | NOTES (NOT PRESENT TO USERS) |
|---|---|---|---|---|---|---|
| 1 | INTERNET · ON-DEMAND | A | — | 50 MIN. | ¥170 | OVERLOAD IN SERVER |
| 2 | INTERNET · ON-DEMAND | B | — | 25 MIN. | ¥90 | OVERLOAD IN SERVER |
| 3 | INTERNET · MULTICAST | A | T2+240 | 250 MIN. | ¥40 | MULTICAST DELIVERY START |
| 4 | INTERNET · MULTICAST | B | T2+250 | 255 MIN. | ¥20 | MULTICAST DELIVERY START |

TIME T3

| ROUTE NO. | DELIVERY MEANS | QUALITY | DELIVERY SCHEDULE | ESTIMATED WAITING TIME | ESTIMATED COMMUNICATION COST | NOTES (NOT PRESENT TO USERS) |
|---|---|---|---|---|---|---|
| 1 | INTERNET · ON-DEMAND | A | — | 40 MIN. | ¥130 | SLIGHT OVERLOAD IN SERVER |
| 2 | INTERNET · ON-DEMAND | B | — | 20 MIN. | ¥70 | SLIGHT OVERLOAD IN SERVER |
| 3 | INTERNET · MULTICAST | A | T3+20 MIN. | 20 MIN. | ¥40 | MULTICAST DELIVERY TO BE STARTED SOON |
| 4 | INTERNET · MULTICAST | B | T3+10 MIN. | 25 MIN. | ¥20 | MULTICAST DELIVERY TO BE STARTED SOON |

TIME T4

| ROUTE NO. | DELIVERY MEANS | QUALITY | DELIVERY SCHEDULE | ESTIMATED WAITING TIME | ESTIMATED COMMUNICATION COST | NOTES (NOT PRESENT TO USERS) |
|---|---|---|---|---|---|---|
| 1 | INTERNET · ON-DEMAND | A | — | 30 MIN. | ¥100 | SLIGHT OVERLOAD N SERVER, LINE |
| 2 | INTERNET · ON-DEMAND | B | — | 15 MIN. | ¥50 | SLIGHT OVERLOAD N SERVER, LINE |
| 3 | INTERNET · MULTICAST | A | T4+240 | 250 MIN. | ¥40 | |
| 4 | INTERNET · MULTICAST | B | T4+250 | 255 MIN. | ¥20 | |

FIG. 9

TIME T0

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | – | 10 MIN. | ¥40 | |
| 2 | INTERNET · MULTICAST | – | – | | NO MULTICAST DELIVERY PLAN |
| 3 | DATA BROADCAST | – | – | | NO BROADCAST DELIVERY PLAN |

TIME T1

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | – | 30 MIN. | ¥100 | SLIGHT OVERLOAD IN SERVER, LINE |
| 2 | INTERNET · MULTICAST | – | – | | NO MULTICAST DELIVERY PLAN |
| 3 | DATA BROADCAST | – | – | | NO BROADCAST DELIVERY PLAN |

TIME T2

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | – | 50 MIN. | ¥170 | OVERLOAD IN SERVER |
| 2 | INTERNET · MULTICAST | 240 MIN. AFTER T2 | 250 MIN. | ¥40 | MULTICAST DELIVERY START |
| 3 | DATA BROADCAST | 480 MIN. AFTER T2 | 481 MIN. | ¥10 | BROADCAST DELIVERY START |

TIME T3

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | – | 40 MIN. | ¥130 | SLIGHT OVERLOAD IN SERVER |
| 2 | INTERNET · MULTICAST | 10 MIN. AFTER T3 | 20 MIN. | ¥40 | MULTICAST DELIVERY TO BE STARTED SOON |
| 3 | DATA BROADCAST | 250 MIN. AFTER T3 | 251 MIN. | ¥10 | |

TIME T4

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | – | 30 MIN. | ¥100 | SLIGHT OVERLOAD IN SERVER, LINE |
| 2 | INTERNET · MULTICAST | 10 MIN. AFTER T4 | 20 MIN. | ¥40 | MULTICAST DELIVERY TO BE STARTED SOON |
| 3 | DATA BROADCAST | 10 MIN. AFTER T4 | 11 MIN. | ¥10 | BROADCAST DELIVERY TO BE STARTED SOON |

TIME T5

| ROUTE NO. | DELIVERY MEANS | DELIVERY SCHEDULE | ESTIMATED WAITING TIME | ESTIMATED COMMUNICATION COST | NOTES (NOT PRESENT TO USERS) |
|---|---|---|---|---|---|
| 1 | INTERNET · ON-DEMAND | – | 30 MIN. | ¥100 | SLIGHT OVERLOAD IN SERVER, LINE |
| 2 | INTERNET · MULTICAST | 240 MIN. AFTER T5 | 250 MIN. | ¥40 | |
| 3 | DATA BROADCAST | 480 MIN. AFTER T5 | 481 MIN. | ¥10 | |